# EUROPÄISCHE PATENTSCHRIFT

(11) **EP 0 607 600 B1**
(45) Veröffentlichungstag und Bekanntmachung des Hinweises auf die Patenterteilung: **03.03.1999**
(21) Anmeldenummer: 93120745.0
(22) Anmeldetag: 22.12.1993
(51) Int. Cl.: H05B 41/392, H05B 41/29

(54) **Verfahren und Schaltungsanordnung zum Einstellen unterschiedlicher Farbtemperaturen bei einer Natrium-Hochdruckentladungslampe**
Process and circuit for controlling the colour temperature of a high pressure sodium lamp
Procédé et circuit pour commander la température de couleur d'une lampe à sodium haute-pression

(30) Priorität: 19.01.1993 DE 4301256
(43) Veröffentlichungstag der Anmeldung: 27.07.1994
(73) Patentinhaber: Patent-Treuhand-Gesellschaft für elektrische Glühlampen mbH, 81543 München (DE)
(72) Erfinder: Bönigk, Michael, D-10245 Berlin (DE); Günther, Klaus, Prof. Dr., D-13187 Berlin (DE); Kloss, Hans-Georg, Dr., D-16540 Hohen Neuendorf (DE); Lehmann, Teja, D-10319 Berlin (DE)

(56) Entgegenhaltungen:
- EP-A- 0 334 356
- EP-A- 0 439 863
- DE-A- 3 636 901
- JOURNAL OF THE ILLUMINATING ENGINEERING SOCIETY, Bd.21, Nr.1, Dezember 1992, NEW YORK US Seiten 60 - 68 RUTAN & AL. 'Practical application of pulsed high pressure sodium lamp technology'

## Beschreibung

Die Erfindung betrifft ein Verfahren zum Einstellen unterschiedlicher Farbtemperaturen bei einer impuls betriebenen Natrium-Hochdruckentladungslampe entsprechend dem Oberbegriff von Anspruch 1. Außerdem betrifft die Erfindung eine Schaltungsanordnung zur Durchführung des Verfahrens.

Zur anspruchsvollen Beleuchtung von Innenräumen, insbesondere von Verkaufsräumen und Schaufenstern, werden energieökonomische Lichtquellen mit sehr guten Farbwiedergabeeigenschaften benötigt, deren Farbtemperatur im Bereich um 3000 K und darunter an den Anwendungszweck angepaßt ist. Die wünschenswerte Farbtemperatur hängt von der Ausstattung und von der Nutzung der Räume, aber auch von der Art der beleuchteten Gegenstände ab. Da die Wirkung sich aus dem spektralen Remissionsverhalten der beleuchteten Objekte ergibt, das meist nur unzureichend bekannt ist, und vorzugsweise im psychologisch-physiologischen Bereich liegt, kann die optimale Farbtemperatur nur mit großer Unsicherheit vorherbestimmt werden, so daß die Eignung einer bestimmten Lichtquelle für den vorgesehenen Anwendungsfall meist experimentell ermittelt werden muß.

Leider steht bisher nur eine einzige Lichtquelle, die Glühlampe, zur Verfügung, deren Farbtemperatur innerhalb gewisser Grenzen veränderbar ist. Betreibt man diese mit unterschiedlicher Leistung, so ändert sich die Farbtemperatur. In viel stärkerem Maße ändert sich allerdings auch der Lichtstrom und die Lichtausbeute, so daß objektive Vergleiche der Farbwirkung in der beleuchteten Umgebung außerordentlich schwierig sind, abgesehen davon, daß sich der Betrieb von Glühlampen bei niedrigen Farbtemperaturen aus ökonomischen Gründen verbietet. Auch die Verwendung unterschiedlicher Lichtquellenarten mit verschiedenen Farbtemperaturen wird dadurch erschwert, daß diese Lichtquellen in unterschiedlichen Leuchten mit meist unterschiedlicher Abstrahlungscharakteristik betrieben werden müssen, die-abgesehen von dem hohen Aufwand - ihrerseits den subjektiven Farbeindruck beeinflussen.

Aufgabe der Erfindung ist es daher, eine Lichtquelle und ein Verfahren zum Einstellen unterschiedlicher Farbtemperaturen bei der Strahlung der Lichtquelle zu finden und durch eine Schaltungsanordnung zu realisieren. Durch die Änderung der Farbtemperatur sollte keine nennenswerte Änderung des Lichtstroms und des Farbwiedergabeindex erfolgen.

Es zeigte sich, daß sich für die Aufgabe Natrium-Hochdruckentladungslampen, die mit einer gepulsten Leistungszufuhr betrieben werden, eignen. Die Aufgabe wird durch ein Verfahren entsprechend den kennzeichnenden Merkmalen des Anspruchs 1 gelöst. Weitere vorteilhafte Merkmale des Verfahrens sind in den Unteransprüchen 2 und 3 zu finden. Im Anspruch 4 wird eine Schaltungsanordnung zur Durchführung des Verfahrens beschrieben.

Bei der gepulsten Leistungszufuhr setzt sich die mittlere Leistung der Natrium-Hochdruckentladungslampe aus einer Folge leistungsstarker kurzer Impulse, die durch Tastpausen voneinander getrennt sind, und einer geringen Halteleistung, die das Verlöschen der Entladung in den Tastpausen verhindert, zusammen. Überraschenderweise stellte sich heraus, daß sich bei gepulst betriebenen Natrium-Hochdrucklampen Farbtemperatur und Farbwiedergabeindex unabhängig voneinander steuern lassen. Untersuchungen zeigten, daß die Farbtemperatur durch die Momentanleistung der Natrium-Hochdruckentladungslampe während der Impulsphase bestimmt wird, während der Farbwiedergabeindex vor allem durch den Dampfdruck in der Lampe festgelegt ist, der seinerseits von der Totraumtemperatur hinter den Elektroden und damit von der Gesamtleistung der Lampe bestimmt wird. Die Farbtemperatur der von der Lampe abgegebenen Strahlung kann damit praktisch unabhängig von den übrigen Lampeneigenschaften durch entsprechende Einstellung der momentanen Impulsleistung eingestellt werden, während die Gesamtleistung der Lampe durch geeignete Festlegung der Impulsfolgefrequenz und Impulsbreite festgehalten wird. Auf diese Weise kann unter Beibehaltung von Farbwiedergabeindex und Lichtstrom die Farbtemperatur problemlos zwischen 2500 und mehr als 3000 K verschoben werden.

Wird die momentane Impulsleistung vorteilhaft als hochfrequente Grundschwingung mit einer bestimmten Frequenz und Schwingungszahl bereitgestellt, so kann die momentane Impulsleistung durch Veränderung der Grundfrequenz gesteuert werden.

Die Vorrichtung zum Einstellen unterschiedlicher Farbtemperaturen besteht vorteilhaft aus einem Oszillator und einem zwischen den Oszillator und die Lampe geschalteten passiven LC-Netzwerk, wobei der Oszillator über ein Steuerteil getastet wird. Durch die Verschiebungen der Grundfrequenz wird über die dadurch veränderte Impedanz des LC-Netzwerks die der Lampe zugeführte Impulsleistung beeinflußt. Eine solche Steuerung der momentanen Impulsleistung arbeitet verlustarm und verzichtet auf den direkten Eingriff in den Leistungskreis.

In der EP 0504 967 A1 wird eine Schaltungsanordnung zum Impulsbetrieb einer Natrium-Hochdruckentladungslampe beschrieben, die eine Veränderung der Farbtemperatur erlaubt. Die Schaltungsanordnung hat jedoch vorrangig die Aufgabe, einen Dimmbetrieb der Lampe zu ermöglichen, wobei keine Konstanthaltung des Lichtstroms und des Farbwiedergabeindex vorgesehen ist.

Aus der DE -A-36 36 901 ist ein Verfahren zum Einstellen unterschiedlicher Farbtemperaturen bekannt, daß sich jedoch von dem hier vorliegenden Verfahren dadurch unterscheidet, daß dabei die Farbtemperatur nicht ohne wesentliche Änderung des Lichtstroms und des Farbwidergabeindexes verschoben werden kann.

Die Druckschrift EP-A-0 439 863 beschreibt ein Verfahren zum hochfrequenten Betrieb einer Quecksilber-Niederdruckentladungslampe mit einer Leuchtstoffschicht, bestehend aus drei Komponenten, die im Rot, Grün bzw. Blau lumineszieren. Durch Einstellung von Tastverhältnis und Amplitude des Rechteckstroms kann der Farbort und damit die Farbtemperatur der resultierenden Strahlung unter Erhaltung des Lichtstromes längs einer angegebenen Linie im Farbdreieck modifiziert werden, indem die beiden Quecksilber-Resonanzlinien bei 185 und 254 nm der verwendeten Leuchtstoffkomponenten in unterschiedlicher Weise angeregt werden.

Die Erfindung ist anhand der nachfolgenden Figuren näher erläutert.
- Figur 1: zeigt ein Prinzipschaltbild für eine erfindungsgemäße Schaltungsanordnung
- Figur 2: zeigt in normaler und in zeitgedehnter Form die von der Schaltungsanordnung der Natrium-Hochdruckentladungslampe zur Verfügung gestellte Impulsleistung P in Abhängigkeit von der Zeit t zur Erzielung von Strahlung bestimmter Farbtemperatur
- Figur 3: zeigt in zeitgedehnter Form die von der Schaltungsanordnung der Natrium-Hochdruckentladungslampe zur Verfügung gestellten Impulsleistungen P in Abhängigkeit von der Zeit t zur Erzielung einer Strahlung mit Farbtemperaturen von 3000 und 2600 K

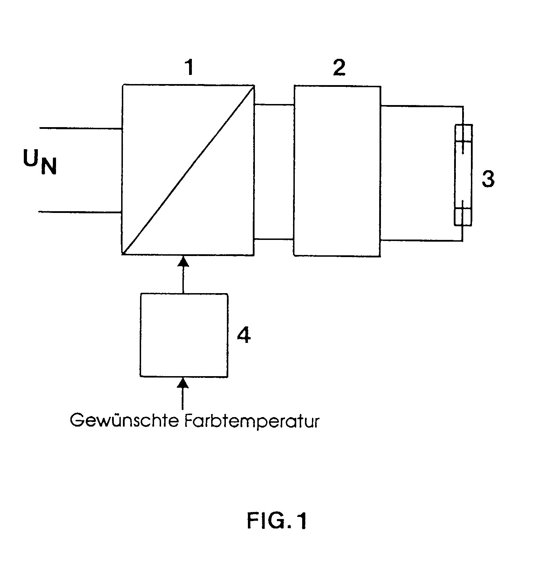

Figur 1 zeigt ein Prinzipschaltbild einer Schaltungsanordnung zur Erzeugung unterschiedlicher Farbtemperaturen bei einer Natrium-Hochdruckentladungslampe 3 üblicher Bauart. Die Schaltungsanordnung setzt sich aus einem Generator 1, der von einem Steuerteil 4 angesteuert wird, und einem passiven LC-Netzwerk 2 zusammen. Die gewünschte Farbtemperatur kann durch eine entsprechende Einstellung am Steuerteil 4 erhalten werden. Im Fall einer Natrium-Hochdruckentladungslampe von nominal 70 W besteht das passive LC-Netzwerk 2 aus einer Reihenschaltung einer Induktivität L von 115 µH und einer Kapazität C von 470 nF.

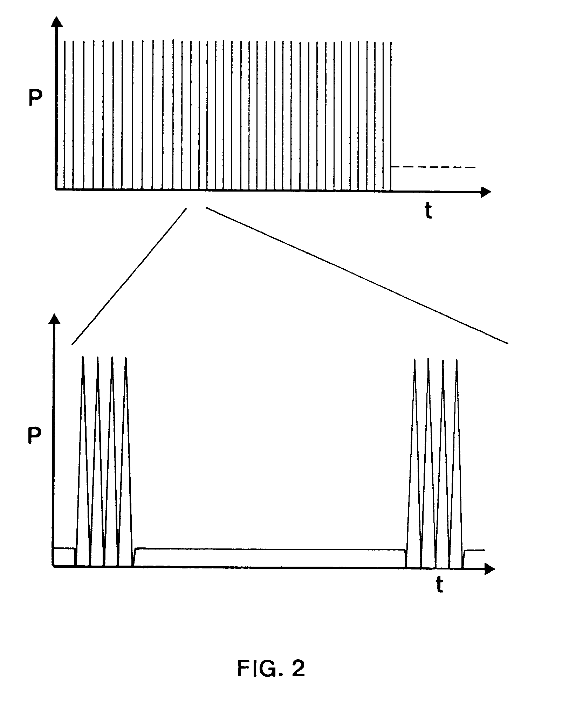

Die von der Schaltungsanordnung der Natrium-Hochdruckentladungslampe zur Verfügung gestellte Impulsleistung P besteht, wie in Fig. 2 dargestellt, aus einer dichten Folge von Leistungsimpulsen mit einer Folgefrequenz zwischen 100 und 600 Hz und einer Impulsbreite zwischen 100 und 500 µs. Zwischen den Leistungsimpulsen erhält die Lampe jeweils eine Halteleistung, um ein Verlöschen der Lampe zu verhindern. Die Leistungsimpulse werden der Lampe, wie aus der zeitgedehnten Form ersichtlich, als Grundfrequenz im kHz-Bereich über das LC-Netzwerk zugeführt.

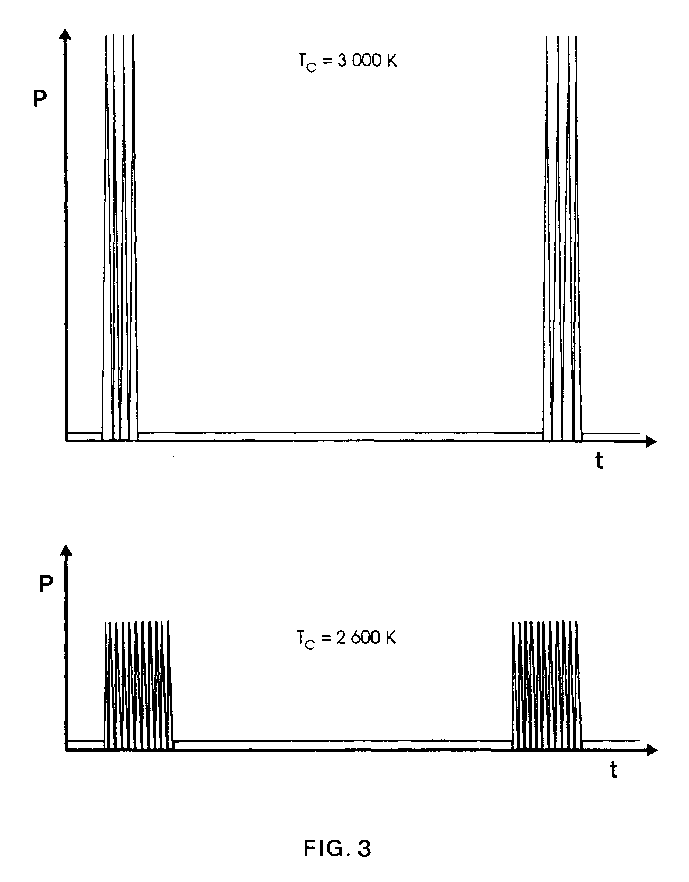

Figur 3 zeigt ein zeitgedehntes Leistungsdiagramm für eine Natrium-Hochdruckentladungslampe von nominal 70 W bei Farbtemperaturen Tc von 3000 und 2600 K.

Bei 3000 K beträgt die momentane Impulsleistung 1,35 kW und die Halteleistung 22 W. Die Leistungsimpulse weisen eine Folgefrequenz von 160 Hz und eine Impulsbreite von 250 µs auf, wobei die Grundfrequenz der Leistungsimpulse 24 kHz beträgt. Die Lampe brennt dabei, mit einer reinen Natrium- und Xenon-Füllung von 150 mbar, mit einer mittleren Leistungsaufnahme von 76 W. Die ausgesandte Strahlung der Lampe weist einen Farbwiedergabeindex Ra von 80 und einen Lichtstrom von 4200 lm auf.

Zur Absenkung der Farbtemperatur auf 2600 K wird, wie in dem zweiten Leistungsdiagramm schematisch dargestellt, die Grundfrequenz der Leistungsimpulse auf 47 kHz verschoben. Die Impulsleistung sinkt auf 0,36 kW; die Folgefrequenz und die Impulsbreite werden auf 210 Hz bzw. 340 µs eingestellt, damit der Farbwiedergabeindex Ra = 80 unverändert bleibt. Bei dieser Einstellung nimmt die Lampe im Mittel 79 W Leistung auf und ihr Lichtstrom steigt geringfügig auf 4500 lm.

Durch den Impulsbetrieb der Natrium-Hochdruckentladungslampe ist es möglich, auf eine Quecksilber-Füllung - wie bei der oben betrachteten Lampe - zu verzichten. Das Verfahren ist jedoch in der gleichen Weise auch mit einer Natrium-Hochdruckentladungslampe durchführbar, die als Füllung zusätzlich Quecksilber beinhaltet. In diesem Fall ergeben sich jedoch etwas andere lichttechnische Daten.

## Patentansprüche

1. Verfahren zum Einstellen unterschiedlicher Farbtemperaturen bei der von einer impulsbetriebenen Natrium-Hochdruckentladungslampe ausgesandten Strahlung, dadurch gekennzeichnet, daß die Farbtemperatur ohne wesentliche Änderung des Lichtstroms und des Farbwiedergabeindex durch Ändern der der Lampe zur Verfügung gestellten momentanen Impulsleistung verschoben wird.

2. Verfahren nach Anspruch 1, dadurch gekennzeichnet, daß die Energieversorgung der Lampe aus einer dichten Folge kurzer momentaner Impulse hoher Leistung und einer dazwischenliegenden niedrigen Halteleistung besteht.

3. Verfahren nach Anspruch 1 und 2, dadurch gekennzeichnet, daß die momentanen Leistungsimpulse aus einer hochfrequenten Schwingung mit einer bestimmten Grundfrequenz bestehen und die Änderung der momentanen Impulsleistung durch Veränderung der Grundfrequenz erfolgt.

4. Schaltungsanordnung zum Einstellen unterschiedlicher Farbtemperaturen bei der von einer impulsbetriebenen Natrium-Hochdruckentladungslampe ausgesandten Strahlung nach Anspruch 1 bis 3, dadurch gekennzeichnet, daß die Schaltungsanordnung aus einem Oszillator (1) und einem zwischen Oszillator (1) und Lampe (3) geschalteten LC-Netzwerk (2) besteht, wobei der Oszillator über ein Steuerteil (4) getastet und in seiner Frequenz eingestellt wird.

5. Natrium-Hochdruckentladungslampe für ein Verfahren gemäß Anspruch 1, dadurch gekennzeichnet, daß die Natrium-Hochdruckentladungslampe eine Füllung aus Natrium, Xenon sowie eventuell Quecksilber aufweist.

## Claims

1. Method for setting different colour temperatures for the radiation emitted by a pulsed sodium high-pressure discharge lamp, characterized in that the colour temperature is displaced without substantial change in the light flux and the colour rendition index by changing the instantaneous pulse power made available to the lamp.

2. Method according to Claim 1, characterized in that the energy supply of the lamp comprises a dense sequence of short instantaneous pulses of high power and a low holding power situated therebetween.

3. Method according to Claims 1 and 2, characterized in that the instantaneous power pulses comprise a high-frequency oscillation at a specific fundamental frequency, and the instantaneous pulse power is changed by varying the fundamental frequency.

4. Circuit arrangement for setting different colour temperatures for the radiation emitted by a pulsed sodium high-pressure discharge lamp according to Claims 1 to 3, characterized in that the circuit arrangement comprises an oscillator (1) and an LC network (2) connected between oscillator (1) and lamp (3), a control section (4) being used to sample the oscillator and set the frequency thereof.

5. Sodium high-pressure discharge lamp for a method in accordance with Claim 1, characterized in that the sodium high-pressure discharge lamp has a filling of sodium, xenon and, if appropriate, mercury.

## Revendications

1. Procédé pour mettre à des températures de couleur différentes le rayonnement émis par une lampe à décharge à haute pression au sodium fonctionnant par des impulsions, caractérisé en ce que l'on décale la température de couleur, sans modification sensible du flux lumineux et de l'indice de rendu des couleurs, en modifiant la puissance instantanée des impulsions mises à disposition de la lampe.

2. Procédé suivant la revendication 1, caractérisé en ce que l'alimentation en énergie de la lampe consiste en une succession dense de brèves impulsions instantanées de grande puissance et en une puissance de maintien intermédiaire basse.

3. Procédé suivant la revendication 1 ou 2, caractérisé en ce que les impulsions de puissance instantanées consistent en une oscillation haute fréquence à une fréquence fondamentale déterminée et en ce que la modification de la puissance instantanée des impulsions s'effectue en modifiant la fréquence fondamentale.

4. Montage pour mettre à des températures de couleur différentes le rayonnement émis par une lampe à décharge à haute pression au sodium fonctionnant par des impulsions suivant l'une des revendications 1 à 3, caractérisé en ce que le montage est constitué d'un oscillateur (1) et d'un système (2) LC monté entre l'oscillateur (1) et la lampe (3), l'oscillateur étant rythmé par l'intermédiaire d'une pièce (4) de commande et sa fréquence étant réglée.

5. Lampe à décharge à haute pression au sodium pour un procédé suivant la revendication 1, caractérisé en ce que la lampe à décharge à haute pression au sodium comporte une atmosphère constituée de sodium, de xénon ainsi que, éventuellement, de mercure.
